# EUROPÄISCHE PATENTSCHRIFT

(11) **EP 1 094 203 B1**
(45) Veröffentlichungstag und Bekanntmachung des Hinweises auf die Patenterteilung: **08.12.2004**
(21) Anmeldenummer: 00121425.3
(22) Anmeldetag: 29.09.2000
(51) Int. Cl.: F01M 11/03

(54) **Ölfiltervorrichtung für Brennkraftmaschinen**
Oil filter for combustion engine
Filtre a huile pour moteur a combustion

(30) Priorität: 22.10.1999 DE 19950888
(43) Veröffentlichungstag der Anmeldung: 25.04.2001
(73) Patentinhaber: Bayerische Motoren Werke Aktiengesellschaft, 80809 München (DE)
(72) Erfinder: Wimmer, Rudolf, 4431 Haidershofen (AT); Addy, Shawn, 4451 Garsten (AT)

(56) Entgegenhaltungen:
- DE-A- 4 240 656
- DE-A- 19 740 268
- DE-A- 19 852 587
- US-A- 5 374 355
- US-A- 5 928 511
- US-A- 5 934 241

## Beschreibung

Die Erfindung bezieht sich nach dem Oberbegriff des Patentanspruches 1 auf eine Ölfiltervorrichtung für Brennkraftmaschinen, umfassend ein mit einer Ölwanne der Brennkraftmaschine integral verbundenes Ölfiltergehäuse mit einer geodätisch unteren Öffnung zum Ein- und Ausbau eines Filtereinsatzes, wobei der Öffnung ein in das Ölfiltergehäuse unter Zwischenschaltung von Ringdichtungen zum Öffnen und Verschließen einführbar ausgebildeter, topfförmiger Verschlussdeckel zugeordnet ist.

Eine derartige Ölfiltervorrichtung ist beispielsweise aus der DE 19619 977 C2 bekannt, wobei der topfförmige Verschlussdeckel zum Entleeren des Ölfiltergehäuses eine gesonderte Ölablassschraube umfasst.

Weiter ist aus der EP 0 937 868 A1 eine Ölfiltervorrichtung bekannt, bei der ein an einer mit der Brennkraftmaschine verbindbaren Konsole integral verbundenes, hängend angeordnetes Ölfiltergehäuse mit einem topfförmigen Verschlussdeckel ausgerüstet ist, der in seinem Topfabschnitt eine Ablauföffnung aufweist, die kurz vor dem Trennen des Verschlussdeckels vom Ölfiltergehäuse offen gesteuert ist.

Bei beiden bekannten Ölfiltervorrichtungen tritt das jeweilige Öl ins Freie aus und ist mittels eines gesonderten Auffanggefäßes zu sammeln.

Der Erfindung liegt die Aufgabe zugrunde, eine gattungsgemäße Ölfiltervorrichtung derart zu verbessern, dass sich eine Ableitung eines wesentlichen Teils des im geschlossenen Ölfiltergehäuses vorhandenen Öles ins Freie erübrigt.

Diese Aufgabe ist mit dem Patentanspruch 1 dadurch gelöst, dass der Verschlussdeckel in Schließstellung mittels eines freien Topfabschnittes und einer Ringdichtung gegenüber einer stromab im Ölfiltergehäuse in die Ölwanne gerichtet angeordneten Ablauföffnung eine Ablaufsperre bildet, die über eine Öffnungsdrehbewegung des Verschlussdeckels aufhebbar ist, wobei eine weitere, verschlussdeckelseitig vorgesehene Ringdichtung zwischen einem freien, öffnungsseitigen Endabschnitt des Ölfiltergehäuses und einem benachbarten Topfabschnitt des Verschlussdeckels eine Auslaufsperre bildet.

Der Vorteil der Erfindung ist darin zu sehen, dass mit der Ableitung eines wesentlichen Teiles von Öl aus dem Ölfiltergehäuse in die Ölwanne eine vereinfachte Handhabung erzielt ist und im weiteren das Öl beispielsweise über ein Führungsrohr für einen Ölmessstab abgesaugt werden kann.

Vorteilhafte Ausgestaltungen der Erfindung sind in Unteransprüchen beschrieben.

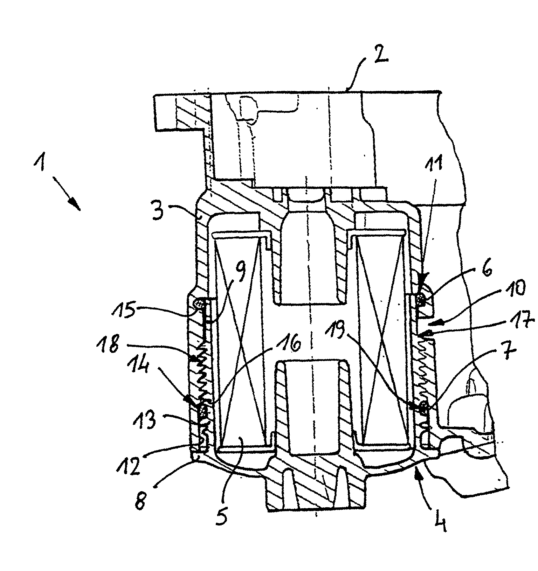

Die Erfindung ist anhand einer in der Zeichnung im Schnitt dargestellten Ölfiltervorrichtung beschrieben.

Eine Ölfiltervorrichtung 1 für eine nicht dargestellte Brennkraftmaschine umfasst ein mit einer Ölwanne 2 der Brennkraftmaschine integral verbundenes Ölfiltergehäuse 3 mit einer geodätisch unteren Öffnung 4 zum Ein- und Ausbau eines Filtereinsatzes 5. Der Öffnung 4 des Ölfiltergehäuses 3 ist ein in das Ölfiltergehäuse 3 unter Zwischenschaltung von Ringdichtungen 6 und 7 zum Öffnen und Verschließen einführbar ausgebildeter, topfförmiger Verschlussdeckel 8 zugeordnet.

Um bei einem Wechsel des Ölfiltereinsatzes 5 eine Ableitung des im Ölfiltergehäuse 3 enthaltenen Öles über die freie Umgebung in ein gesondertes Auffanggefäß zu vermeiden, ist erfindungsgemäß vorgesehen, dass der Verschlussdeckel 8 in Schließstellung mittels eines freien Topfabschnittes 9 und einer Ringdichtung 6 gegenüber einer stromab im Ölfiltergehäuse 3 in die Ölwanne 2 gerichtet angeordneten Ablauföffnung 10 eine Ablaufsperre 11 bildet, die über eine Öffnungsdrehbewegung des Verschlussdeckels 8 aufhebbar ist, wobei eine weitere, verschlussdeckelseitig vorgesehene Ringdichtung 7 zwischen einem freien, öffnungsseitigen Endabschnitt 12 des Ölfiltergehäuses 3 und einem benachbarten Topfabschnitt 13 des Verschlussdeckels 8 eine Auslaufsperre 14 bildet.

Mit dieser Erfindung ist sichergestellt, dass vor der endgültigen Abtrennung des Verschlussdeckels 8 vom Ölfiltergehäuse 3 zum Ein- und Ausbau eines Filtereinsatzes 5 ein wesentlicher Teil des im Ölfiltergehäuse 3 vorhandenen Öles über die Ablauföffnung 10 in die Ölwanne 2 der nicht dargestellten Brennkraftmaschine abfließt und beispielsweise über ein nicht gezeigtes Führungsrohr eines nicht dargestellten Ölmessstabes abgesaugt werden kann.

Für eine vorteilhaft einfache Ausgestaltung der Ablaufsperre 14 ist weiter vorgesehen, dass der freie Topfabschnitt 9 des Verschlussdeckels 8 über eine zylindrische Außenkontur mit der in einer Ringnut 15 des Ölfiltergehäuses 3 lagefixierten Ringdichtung 6 zur Bewirkung der Ablaufsperre 14 zusammenwirkt.

In weiterer Ausgestaltung der Erfindung weist der Verschlussdeckel 8 an seinem Topf 16 ein auf Höhe der Unterkante 17 der Ablauföffnung 10 im Ölfiltergehäuse 3 endendes Außengewinde 18 auf, dem andernends eine Umfangsnut 19 für die weitere, im Verschlussdeckel 8 lagefixiert angeordnete Ringdichtung 7 zugeordnet ist, wobei diese Ringdichtung 7 mit einer zylindrischen Innenkontur des öffnungsseitigen Endabschnittes 12 des Ölfiltergehäuses 3 zur Bewirkung der Auslaufsperre 14 zusammenwirkt. Damit ist während des Ölablaufes über die Ablauföffnung 10 in die Ölwanne 2 sichergestellt, dass kein Öl vom geöffneten Verschlussdeckel 8 ins Freie abtropft.

## Patentansprüche

1. Ölfiltervorrichtung für Brennkraftmaschinen,
- umfassend ein mit einer Ölwanne (2) der Brennkraftmaschine integral verbundenes Ölfiltergehäuse (3) mit einer geodätisch unteren Öffnung (4) zum Ein- und Ausbau eines Filtereinsatzes (5), wobei
- der Öffnung (4) ein in das Ölfiltergehäuse (3) unter Zwischenschaltung von Ringdichtungen (6, 7) zum Öffnen und Verschließen einführbar ausgebildeter, topfförmiger Verschlussdeckel (8) zugeordnet ist,
**dadurch gekennzeichnet,**
- **dass** der Verschlussdeckel (8) in Schließstellung mittels eines freien Topfabschnittes (9) und einer Ringdichtung (6) gegenüber einer stromab im Ölfiltergehäuse (3) in die Ölwanne (2) gerichtet angeordneten Ablauföffnung (10) eine Ablaufsperre (11) bildet, die über eine Öffnungsbewegung des Verschlussdeckels (8) aufhebbar ist, wobei
- eine weitere, verschlussdeckelseitig vorgesehene Ringdichtung (7) zwischen einem freien, öffnungsseitigen Endabschnitt (12) des Ölfiltergehäuses (3) und einem benachbarten Topfabschnitt (13) des Verschlussdeckels (8) eine Auslaufsperre (14) bildet.

2. Ölfiltervorrichtung nach Anspruch 1, **dadurch gekennzeichnet, dass** der freie Topfabschnitt (9) des Verschlussdeckels (8) über eine zylindrische Aussenkontur mit der in einer Ringnut (15) des Ölfiltergehäuses (3) lagefixierten Ringdichtung (6) zur Bewirkung der Ablaufsperre (11) zusammenwirkt.

3. Ölfiltervorrichtung nach Anspruch 1 oder 2, **dadurch gekennzeichnet,**
- **dass** der Verschlussdeckel (8) an seinem Topf (16) ein auf Höhe der Unterkante (17) der Ablauföffnung (10) im Ölfiltergehäuse (3) endendes Außengewinde (18) aufweist, dem
- andernends eine Umfangsnut (19) für die weitere, im Verschlussdeckel (8) lagefixiert angeordnete Ringdichtung (7) zugeordnet ist, wobei
- diese Ringdichtung (7) mit einer zylindrischen Innenkontur des öffnungsseitigen Endabschnittes (12) des Ölfiltergehäuses (3) zur Bewirkung der Auslaufsperre (14) zusammenwirkt.

## Claims

1. An oil filter arrangement for internal combustion engines,
- comprising an oil filter casing (3) integrally connected to an oil sump (2) of the engine and with a geodetic bottom opening (4) for installing and removing a filter insert (5), wherein
- the opening (4) is associated with a pot-shaped lid (8) insertable for opening and closing into the oil filter casing (3) with interposition of O-rings (6, 7),
**characterised in that**
- in the closed position the lid (8), via a free pot portion (9) and an O-ring (6), forms a discharge barrier (11) blocking an opening (10) into the oil sump (2) downstream in the oil filter casing (3), and
- the barrier is removable by opening the lid (8), wherein
- an additional O-ring (7) on the lid side forms an outflow barrier (14) between a pot portion (13) of the lid (8) and a neighbouring free end portion (12) of the oil filter casing (3) on the opening side.

2. An oil filter device according to claim 1, **characterised in that** the free pot portion (9) of the lid (8), via a cylindrical outer contour, forms the discharge barrier (11) in co-operation with an O-ring (6) fixed in position in an annular groove (15) in the oil filter casing (3).

3. An oil filter device according to claim 1 or 2, **characterised in that**
- the pot part (16) of the lid (8) has an outer screwthread (18) which ends level with the bottom edge (17) of the discharge opening (10) in the oil filter casing (3),
- the other end of the thread being associated with a peripheral groove (19) for the additional O-ring (7) fixed in position in the lid (8), wherein
- the O-ring (7) forms the outflow barrier (14) in co-operation with a cylindrical inner contour of the opening-side end portion (12) of the oil-filter casing (3).

## Revendications

1. Filtre à huile de moteur à combustion interne,
- comprenant un boîtier de filtre à huile (3) faisant corps avec la bâche à huile (2) du moteur à combustion interne et ayant une ouverture inférieure géodésique (4) pour le montage et le remplacement d'une garniture de filtre (5),
- l'ouverture (4) comportant un couvercle (8) avec un manchon qui se glisse dans le boîtier de filtre à huile (3) avec interposition de joints annulaires (6, 7) pour l'ouverture et la fermeture,
**caractérisé en ce qu'**
en position de fermeture, à l'aide du segment libre (9) de son manchon et d'un joint annulaire (6), le couvercle (8) forme une fermeture (11) à l'encontre d'un orifice de sortie (10) situé en aval dans le boîtier de filtre (3) pour être dirigé dans la bâche à huile (2),
cette fermeture pouvant être ouverte par un mouvement d'ouverture du couvercle (8), alors qu'un autre joint annulaire (7) prévu sur le couvercle entre le segment d'extrémité (12) libre du côté de l'ouverture du boîtier de filtre à huile (3) et un segment voisin (13) du manchon du couvercle (8) forme une fermeture (14).

2. Filtre à huile selon la revendication 1,
**caractérisé en ce que**
le segment libre (9) du manchon du couvercle (8) coopère par un contour cylindrique extérieur avec le joint annulaire (6) bloqué en position dans une rainure annulaire (15) du boîtier de filtre à huile (3) pour réaliser la fermeture de sortie (11).

3. Filtre à huile selon la revendication 1 ou 2,
**caractérisé en ce que**
le couvercle (8) comporte sur son manchon (16), un filetage extérieur (18) qui se termine au niveau de l'arête inférieure (17) de l'orifice de sortie (10) prévu dans le boîtier (3) du filtre à huile,
- à l'autre extrémité, il est prévu une rainure périphérique (19) recevant un autre joint annulaire (7) bloqué en position dans le couvercle (8), et
- ce joint annulaire (7) coopère avec le contour intérieur cylindrique du segment d'extrémité (12) du côté de l'ouverture du boîtier de filtre (3) pour réaliser la fermeture de sortie (14).
